# FASCICULE DE BREVET EUROPEEN

(11) **EP 0 796 691 B1**
(45) Date de publication et mention de la délivrance du brevet: **15.09.1999**
(21) Numéro de dépôt: 97400578.7
(22) Date de dépôt: 14.03.1997
(51) Int. Cl.: B23D 21/02, F16L 55/18

(54) **Dispositif de découpe longitudinale d'un tube**
Vorrichtung zum longitudinalen Schneiden von Rohren
Apparatus for cutting the longitude of tubes

(30) Priorité: 18.03.1996 FR 9603346
(43) Date de publication de la demande: 24.09.1997
(73) Titulaire: GAZ DE FRANCE (SERVICE NATIONAL), F-75017 Paris (FR)
(72) Inventeur: Leconte, Didier, 91210 Draveil (FR); Caillet, René, 38500 Voiron (FR); Clerc, Christian, 38500 Voiron (FR); Garneret, Gilles, 94220 Charenton le Pont (FR)
(74) Mandataire: Lerner, François

(56) Documents cités:
- US-A- 5 460 071

## Description

L'invention se rapporte à un dispositif de découpe longitudinale d'un tube suivant son axe.

Il s'agit, en particulier, dans le cas où une conduite "de tubage" a été introduite à l'intérieur du tube, de découper une portion dudit tube en forme de calotte pour avoir accès à la conduite. Pour ce faire, on souhaite réaliser deux entailles longitudinales qui seront ensuite jointes par deux entailles radiales.

L'invention vise en particulier à permettre la mise en place du dispositif, sur un tube enfoui dans le sol, du haut d'un puits d'accès au tube disposé sous terre. Afin de réduire la gêne occasionnée à la circulation des piétons ou des véhicules, les perturbations sur l'environnement et le coût de réalisation d'un tel puits d'accès, on cherche à en réduire les dimensions. Si celui-ci a, comme on cherche à le faire, une section d'environ 60 centimètres de côté, il est alors délicat, voire impossible, pour une personne de descendre au fond du puits pour effectuer les opérations de mise en place du dispositif.

Certes, il est décrit dans US-A-5 460 071 un dispositif de découpe longitudinale comprenant :
- un bâti présentant un axe longitudinal et comportant des moyens de fixation amovible au tube et un rail allongé de guidage lié aux moyens de fixation amovible, pour disposer ledit bâti autour du tube avec son rail disposé suivant l'axe du tube,
- des moyens mobiles comportant un chariot guidé en translation le long du rail, entre deux positions extrêmes, et des moyens de découpe liés au chariot, et
- des moyens de commande en déplacement du chariot par rapport au bâti.

Toutefois, les moyens de fixation du dispositif sur le tube décrits dans US-A-5 460 071 sont difficiles à mettre en oeuvre dans le cas d'un puits de fouille étroit ou dans le cas d'une action à distance depuis le haut de la fouille. Afin de résoudre ce problème, l'invention propose que :
- les moyens de fixation amovible comportent deux pinces,
- chaque pince comprenne deux mâchoires, une entretoise et des moyens de serrage pour serrer les pinces,
- les mâchoires comportent une zone de pincement et soient articulées en rotation par rapport à l'entretoise qui les lie entre elles,
- les moyens de serrage soient disposés entre les mâchoires du côté opposé à la zone de pincement par rapport à l'entretoise, et exercent un effort pour actionner les mâchoires, et
- le rail soit disposé entre les pinces.

Ce dispositif peut être aisément mis en place au fond du puits d'accès. En outre, il ne nécessite pas de creuser ce puits d'accès jusque sous le tube.

L'invention s'est également attachée à assurer tant une régularité de découpe de l'entaille, et une "répétabilité" dans la longueur découpée, lorsque le dispositif ne dispose pas de butée de fin de course, qu'une résistance aux chocs provoqués par l'impact du chariot contre lesdites butées, dans le cas contraire. C'est pourquoi, l'invention propose, pour améliorer la robustesse du dispositif et sa sécurité d'emploi, que les moyens de commande soumettent avantageusement les moyens mobiles à une accélération continue et sensiblement constante à l'endroit et à proximité de chacune des positions extrêmes, pour que la vitesse de déplacement desdits moyens mobiles dans un sens diminue progressivement jusqu'à s'annuler en bout de course, puis augmente progressivement en sens inverse, sans que soit exercé sur eux un effort extérieur aux moyens de commande.

Ainsi, non seulement la sécurité d'emploi et la fiabilité dans le temps seront améliorés, mais de plus tout l'effort de coupe sera appliqué à la découpe et ne sera donc pas inutilement dissipé dans des chocs.

On considérera que les moyens mobiles sont "autour, ou à proximité, des positions extrêmes", lorsqu'elles seront distantes de celles-ci de moins d'un dixième de la distance entre elles. L'accélération sera, d'autre part, considérée comme "sensiblement constante" autour de ces positions extrêmes, lorsque la somme de ses variations autour desdites positions sera inférieure au quart de sa valeur maximale.

Pour améliorer encore l'efficacité du dispositif et sa robustesse, l'invention prévoit en outre que :
- les moyens de découpe peuvent comporter au moins deux bras propres à venir chacun en contact du tube de part et d'autre de lui,
- sur au moins un des bras est disposée au moins une molette de découpe propre à venir en contact du tube en une zone sensiblement diamétralement opposée, à la (aux) zone(s) de contact de l'autre bras, et disposés du côté opposé au bâti par rapport au plan passant par l'axe du tube et perpendiculaire au plan passant par l'axe du tube et l'axe du bâti.

Les efforts de coupe et de fixation vont ainsi en partie s'opposer, contribuant à une meilleure rigidité de l'ensemble du dispositif.

L'invention prévoit d'autre part, toujours pour améliorer la fiabilité du dispositif et en particulier la qualité de la découpe, qu'avantageusement:
- les moyens de découpe comportent au moins deux bras propres à venir chacun en contact du tube de part et d'autre de lui,
- sur un desdits bras est disposée au moins une molette de découpe, et
- sur un autre bras est disposé un patin d'appui en forme de diabolo.

Ainsi, non seulement la réalisation d'une entaille ne vient pas gêner la réalisation de l'autre, mais de plus la forme particulière du patin d'appui permet une bonne répartition de l'appui sur le tube favorisant le guidage des moyens mobiles. La réalisation de la deuxième entaille pourra se faire par retournement des moyens mobiles sur le rail. Du fait de la forme spécifique du patin, celui-ci viendra en appui de part et d'autre de ladite première entaille, et non dessus.

Une autre caractéristique avantageuse de l'invention vise à faciliter la mise en place du dispositif, du haut d'un puits de fouille tout en améliorant son efficacité et sa robustesse. Pour cela, l'invention propose que les moyens de découpe comportent au moins deux bras articulés chacun en rotation par rapport au chariot et propres à venir en contact de part et d'autre sur le tube, sous l'action de moyens de pression disposés entre les bras du côté opposé, par rapport au chariot, aux zones prévues de contact des bras avec ledit tube.

Ainsi, le dispositif pourra être posé sur le tube, tout en permettant l'actionnement de tous les moyens par le dessus, depuis la surface.

Un autre problème résolu par l'invention consiste à éviter d'endommager la conduite disposée à l'intérieur du tube, sachant que l'on ne connaît a priori pas sa position. L'invention propose alors que les moyens de découpe comportent des molettes pivotantes de découpe et des cales de réglage pour ajuster la profondeur de coupe. Ainsi, les molettes de découpe ne pourront pas pénétrer à l'intérieur du tube jusqu'à détériorer la conduite.

D'autres caractéristiques, objets ou avantages de l'invention apparaîtront plus clairement à l'aide de la description qui va suivre, faite en référence aux dessins annexés dans lesquels :
- la figure 1 représente un schéma d'un dispositif conforme à l'invention,
- la figure 2 représente un détail des moyens mobiles de la figure 1,
- la figure 3 représente une variante du dispositif de la figure 1 vue suivant le plan III-III,
- la figure 4 représente le dispositif de la figure 3 en coupe suivant le plan IV-IV,
- la figure 5 représente les moyens mobiles et les moyens de commande de la figure 4 du dispositif en vue de dessus.

Sur les figures, est illustré un dispositif destiné à la réalisation de découpes longitudinales sur un tube 1, suivant l'axe 2 dudit tube. Ce dispositif se compose essentiellement d'un bâti 4, de moyens mobiles 8 et de moyens de commande 10 en déplacement des moyens mobiles suivant l'axe longitudinal 6 du dispositif qui est aussi celui du bâti.

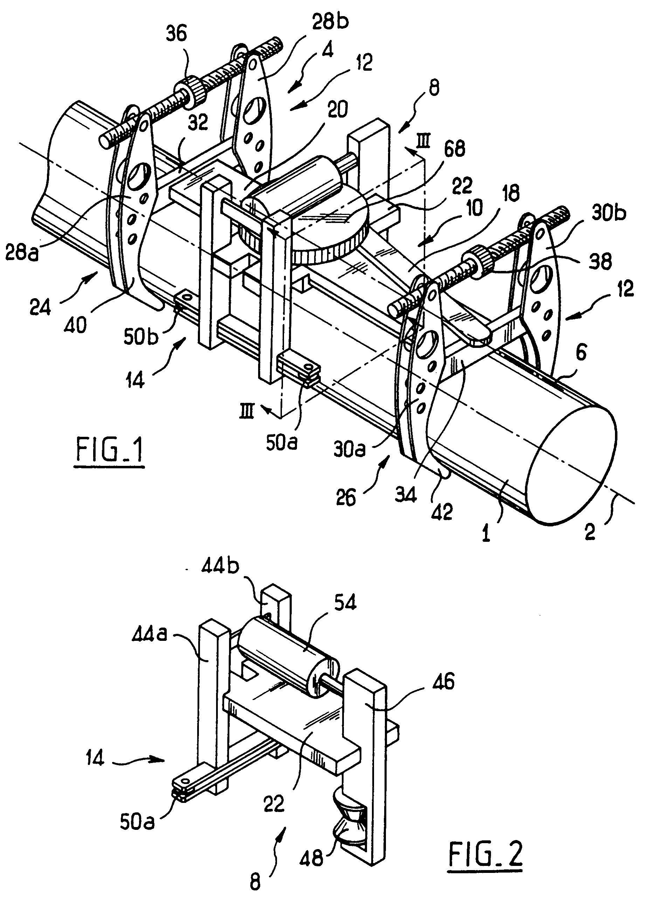

Tel qu'illustré principalement en figure 1, le bâti 4 comporte des moyens de fixation 12 comprenant une première pince 24 et une deuxième pince 26 entre lesquelles est disposé un rail axial allongé 20. Chacune des pinces 24 ; 26 est formée de deux mâchoires 28a et 28b ; 30a et 30b articulées en rotation par rapport à une entretoise 32 ; 34 et présente, d'un côté de l'entretoise, une zone de pincement 40 ; 42 où le tube 1 est enserré sous l'action de moyens de serrage 36 ; 38 disposés de l'autre côté de l'entretoise 32; 34. Ici, les moyens de serrage 36 ; 38 sont constitués par une vis liée à chacune des mâchoires 28a et 28b ; 30a et 30b dans un mouvement de translation hélicoïdale de sens opposés. La rotation de la vis provoque, dans un sens, l'écartement des mâchoires au niveau de la vis et leur rapprochement au niveau des zones de pincement, et inversement dans le sens inverse. Les moyens de fixation 12 sont disposés essentiellement d'un côté du tube 1, ici au-dessus.

Cette structure des moyens de fixation 12 permet la fixation du bâti 4 sur le dessus du tube 1 et ne nécessite de dégager qu'un espace réduit autour du tube 1, les moyens de fixation étant accessibles par le dessus.

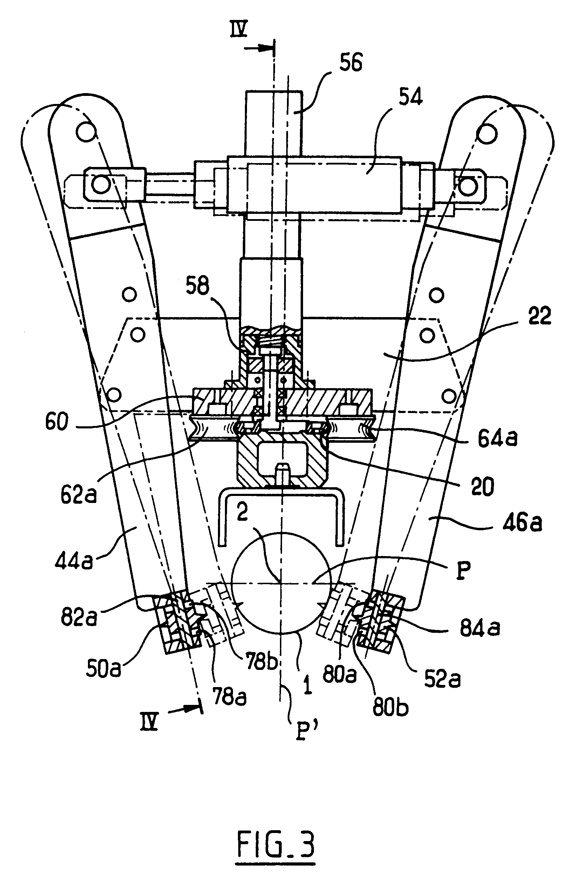

Les moyens mobiles 8, principalement illustrés en figures 2 et 3, comprennent un chariot 22 coulissant sur le rail 20 et des moyens de découpe 14. Les moyens de découpe 14 comportent des bras 44a, 44b ; 46, 46a, 46b disposés de part et d'autre du tube 1.

Ces bras sont articulés en rotation par rapport au chariot 22. D'un côté dudit chariot 22, au moins un des bras porte des molettes de découpe pivotantes, tandis que les autres peuvent posséder soit des molettes de découpe comme illustré à la figure 3, soit un patin d'appui comme à la figure 2. De l'autre côté, des moyens de pression (ici constitués par un vérin 54) agissent sur les bras disposés de part et d'autre du tube pour les écarter ou les rapprocher, tel qu'illustré en trait mixte sur la figure 3.

Outre le fait que les bras portent des patins d'appui ou des molettes de découpe, les figures 2 et 3 se différencient également par le nombre de bras, bien que ce point n'engendre pas de conséquence notable.

Tel qu'illustré en figure 3, le bâti 4 et les moyens de découpe 14 présentent sensiblement un plan de symétrie passant par l'axe 2 du tube 1 et l'axe 6 du bâti 4. Perpendiculairement à ce plan que l'on dénommera P', on définit un plan P passant par l'axe du tube 1.

Sous l'action des moyens de pression 54, les molettes de découpe 50a, 52a, montées pivotantes autour d'axes 82a, 84a, viennent en contact du tube 1, de part et d'autre de lui par rapport au plan P'. De plus, les zones de contact des molettes sur le tube sont situées du côté opposé au bâti par rapport au plan P, c'est-à-dire ici en dessous dudit plan P, de sorte qu'il en résulte un effort dirigé vers les moyens d'attache constitués par l'articulation entre les bras 44a, 46a avec le chariot 22. L'équilibre des forces concourant à la qualité de la découpe, via la rigidité des moyens de découpe, est ainsi amélioré.

Des cales de réglage 78a, 78b ; 80a, 80b sont placées sur les axes 82a ; 84a autour des molettes de découpe 50a ; 52a pivotantes pour régler la profondeur de découpe. En les choisissant plus ou moins épaisses, on fera varier la profondeur de pénétration des molettes dans le tube avant que les cales viennent en butée sur le tube.

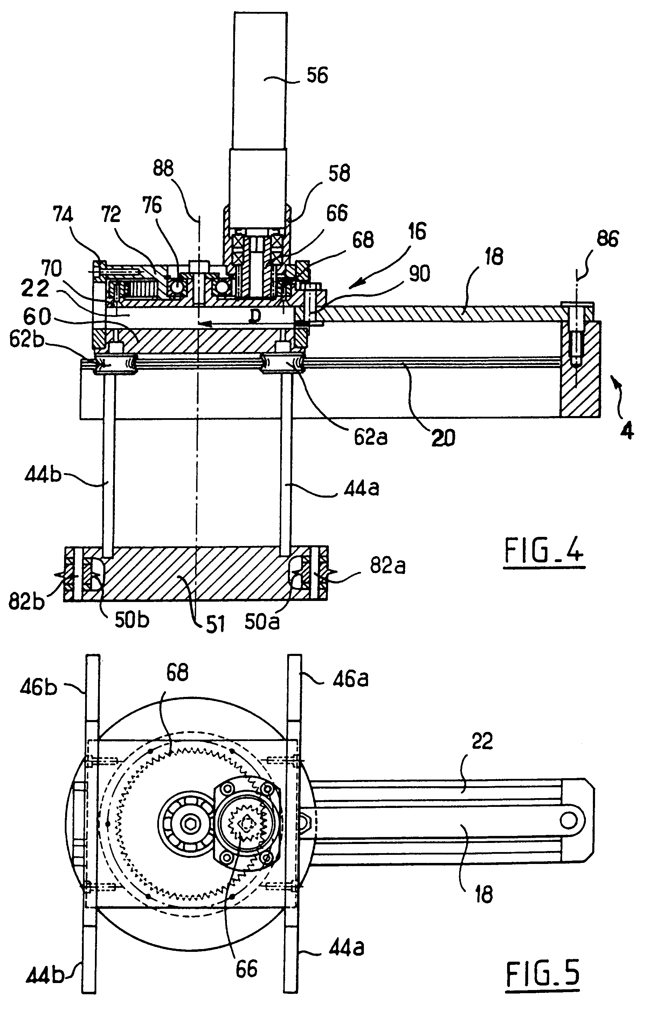

Par ailleurs, tel qu'illustré en figures 3 et 4, le chariot 22 est solidaire d'un support 60. Ce support porte des patins de coulissement 62a, 62b; 64a disposés de part et d'autre du rail 20.

Voyons maintenant plus en détail les moyens de commande en déplacement 10 illustrés en figures 3 à 5. Ceux-ci comprennent un moteur 56 et des moyens de transmission 16. Le moteur 56 est fixé au chariot 22 par l'intermédiaire d'une pièce de fixation 58 et du support 60.

Nous allons maintenant décrire les moyens de transmission 16 : le moteur 56 porte un pignon 66 qui engrène sur une couronne 68. La couronne étant solidaire d'un support de couronne 70, celle-ci est articulée en rotation autour d'un axe 88, par l'intermédiaire d'un roulement à billes 76, par rapport au chariot 22 lui-même solidaire d'un carter 72 et d'un flasque 74. La couronne est, d'autre part, liée au bâti 4 par l'intermédiaire d'une manivelle 18 liée en rotation à une extrémité par rapport au bâti 4 autour d'un axe 86 et à l'autre extrémité autour d'un axe 90 par rapport au support de couronne 70.

Étudions maintenant plus précisément le fonctionnement du dispositif : une fois le bâti 4 fixé sur le tube 1, les moyens mobiles 8 disposés sur le bâti 4 et les moyens de découpe 14 positionnés autour du tube 1, on met le moteur 56 en route, ce qui provoque la rotation du support de couronne 70. Puisqu'il tourne sur lui-même par rapport au chariot 22 et est lié par la manivelle 18 au bâti 4, le moteur va provoquer la translation du chariot 22 le long du rail 20 parallèlement à l'axe 2 du tube 1. La rotation du moteur 56 engendrant la translation du chariot 22 par rapport au bâti 4, les moyens de transmission 16 représentent donc bien un ensemble bielle-manivelle.

Le chariot 22 va alors se déplacer en translation entre deux positions extrêmes distantes de deux fois la distance D entre l'axe 88 et l'axe 90. Plusieurs molettes de découpe 50a, 50b sont portées par une joue 51 fixée aux bras 44a, 44b et sont disposées d'un même côté du tube par rapport au plan P', comme illustré à la figure 4. Ainsi, la longueur de découpe du tube est multipliée et la découpe est réalisée sur toute la longueur entre les pinces 24, 26, sans perdre la course morte due à la largeur des moyens mobiles 8. La distance entre les deux dites molettes 50a et 50b est légèrement inférieure à 2D, de sorte que les découpes réalisées par les molettes se recouvrent partiellement.

La variante de la figure 2 montrant l'utilisation du diabolo roulant 48 permet d'éviter les problèmes inhérents au fait que les molettes de découpe 50a, 50b situées d'un côté peuvent finir la découpe avant celles situées de l'autre côté 52a. La forme en diabolo de ce patin d'appui 48 améliore de plus le guidage par rapport au tube en assurant un double contact ponctuel dû à sa section en vé. En outre, cette forme permet de ne pas "rouler" sur la première découpe lorsque l'on réalise la seconde après retournement, la première découpe étant alors située sensiblement au niveau de la section réduite du diabolo.

D'un point de vue dynamique, si le moteur 56 tourne à vitesse constante, la vitesse de translation du chariot 22 et par conséquent son accélération par rapport au bâti 4 sont quasiment sinusoïdales. L'accélération est donc continue, c'est-à-dire que les moyens mobiles ne subissent pas de chocs (la somme des forces extérieures aux moyens de commande s'exerçant sur le chariot étant liée linéairement à l'accélération).

L'accélération est, de plus, maximale lorsque la vitesse est nulle en bout de course, à chaque extrémité. Puisque cette accélération est sensiblement sinusoïdale, on peut considérer qu'elle est quasiment constante à l'endroit et à proximité desdites positions extrêmes, de sorte que la vitesse diminue progressivement, jusqu'à s'annuler en bout de course puis, après passage du chariot au-delà de cette position extrême de bout de course, augmente progressivement, lors du déplacement du chariot en sens inverse.

Les dessins ne sont donnés qu'à titre d'exemple et ne sauraient limiter la portée de l'invention. On aurait, en particulier, pu prévoir des moyens de découpe munis de bras concaves, c'est-à-dire recourbés l'un vers l'autre, de façon à pouvoir couvrir une gamme plus large de diamètres de tube.

## Revendications

1. Dispositif de découpe longitudinale d'un tube (1) suivant son axe (2), comprenant :
- un bâti (4) présentant un axe longitudinal (6) et comportant des moyens de fixation amovible (12) au tube et un rail (20) allongé de guidage lié aux moyens de fixation amovible (12), pour disposer ledit bâti (4) autour du tube (1) avec son rail (20) disposé suivant l'axe (2) du tube (1),
- des moyens mobiles (8) comportant un chariot (22) guidé en translation le long du rail (20), entre deux positions extrêmes, et des moyens de découpe (14) liés au chariot (22), et
- des moyens de commande (10) en déplacement du chariot (22) par rapport au bâti (4),
caractérisé en ce que :
- les moyens de fixation amovible (12) comportent deux pinces (24, 26),
- chaque pince (24 ; 26) comprend deux mâchoires (28a, 28b ; 30a, 30b), une entretoise et des moyens de serrage (36 ; 38) pour serrer les pinces,
- les mâchoires comportent une zone de pincement (40 ; 42) et sont articulées en rotation par rapport à l'entretoise (32 ; 34) qui les lie entre elles,
- les moyens de serrage (36 ; 38) sont disposés entre les mâchoires du côté opposé à la zone de pincement par rapport à l'entretoise, exerçant un effort pour actionner les mâchoires, et
- le rail (20) est disposé entre les pinces (24 ; 26).

2. Dispositif selon la revendication 1, caractérisé en ce que les moyens de commande (10) soumettent les moyens mobiles (8) à une accélération continue et sensiblement constante autour de chacune des positions extrêmes, pour que la vitesse de déplacement desdits moyens mobiles dans un sens diminue progressivement jusqu'à s'annuler en bout de course, puis augmente progressivement en sens inverse, sans que soit exercé sur eux un effort extérieur aux moyens de commande (10).

3. Dispositif selon la revendication 1, caractérisé en ce que les moyens de commande (10) en déplacement comprennent un ensemble bielle-manivelle (66, 68, 18).

4. Dispositif selon l'une quelconque des revendications précédentes, dans lequel le bâti (4) est disposé essentiellement d'un côté du tube, caractérisé en ce que :
- les moyens de découpe (14) comportent au moins deux bras (44a, 44b ; 46a, 46b) venant chacun en contact du tube (1) de part et d'autre de lui,
- sur au moins un des bras (44a) est disposée au moins une molette de découpe (50a) propre à venir en contact du tube en une zone sensiblement diamétralement opposée, à la (aux) zone(s) de contact de l'autre bras (46a), et disposés du côté opposé au bâti par rapport au plan (P) passant par l'axe (2) du tube (1) et perpendiculaire au plan (P') passant par l'axe du tube et l'axe (6) du bâti (4).

5. Dispositif selon l'une quelconque des revendications 1 à 3, caractérisé en ce que :
- les moyens de découpe (14) comportent au moins deux bras (44a, 44b ; 46) propres à venir chacun en contact du tube (1) de part et d'autre de lui,
- sur un desdits bras (44a, 44b) est disposée au moins une molette (50a) de découpe, et
- sur un autre bras (46) est disposé un patin d'appui (46) en forme de diabolo.

6. Dispositif selon l'une quelconque des revendications précédentes, caractérisé en ce que les moyens de découpe (14) comportent au moins deux bras (44a , 46a) articulés chacun en rotation par rapport au chariot (22) et propres à venir en contact de part et d'autre sur le tube (1) sous l'action de moyens de pression (54) disposés entre les bras du côté opposé, par rapport au chariot, aux zones prévues de contact des bras avec ledit tube.

7. Dispositif selon l'une quelconque des revendications précédentes, caractérisé en ce que les moyens de découpe (14) comportent des molettes pivotantes de découpe (50a ; 52b) et des cales de réglage (78a, 78b ; 80a, 80b) pour ajuster la profondeur de coupe.

## Claims

1. Device for longitudinal cutting of a pipe (1) along its axis (2), comprising:
- a frame (4) which has a longitudinal axis (6) and comprises detachable means (12) for attachment to the pipe, and an elongate guiding rail (20) attached to the detachable attachment means (12), such that the frame (4) can be disposed around the pipe (1) with its rail (20) disposed along the axis (2) of the pipe (1);
- mobile means (8) which comprise a carriage (22) which is guided in translation along the rail (20), between two end positions, and cutting means (14) connected to the carriage (22); and
- means (10) for controlling the displacement of the carriage (22) relative to the frame (4),
characterised in that:
- the detachable attachment means (12) have two grippers (24, 26);
- each gripper (24, 26) comprises two jaws (28a, 28b; 30a, 30b), a brace, and clamping means (36, 38) for clamping the grippers ;
- the jaws have a gripping area (40, 42), and are articulated in rotation relative to the brace (32, 34) which connects them to one another;
- the clamping means (36, 38) are disposed between the jaws on the side opposite the gripping area relative to the brace, and exert force in order to activate the jaws; and
- the rail (20) is disposed between the grippers (24, 26).

2. Device according to claim 1, characterized in that the control means (10) subject the mobile means (8) to acceleration which is continuous and substantially constant around each of the end positions, such that the speed of displacement of these mobile means in one direction decreases gradually until it reaches zero at the end of travel, then gradually increases in the reverse direction, without any force other than that of the control means (10) being exerted on them.

3. Device according to claim 1, characterised in that the control means (10) for displacement comprise a connecting rod - crank assembly (66, 68, 18).

4. Device according to any one of the preceding claims, in which the frame (4) is disposed substantially on one side of the pipe, characterized in that:
- the cutting means (14) comprise at least two arms (44a, 44b; 46a, 46b) each of which come into contact with the pipe (1), on both sides of the latter;
- on at least one of the arms (44a) there is disposed at least one cutting wheel (50a) which can come into contact with the pipe in an area which is substantially diametrically opposed to the area(s) of contact of the other arm (46a), and disposed on the side of the frame which is opposite in relation to the plane (P) which passes through the axis (2) of the pipe (1) and is perpendicular to the plane (P') which passes through the axis of the pipe and the axis (6) of the frame (4).

5. Device according to any one of claims 1 to 3,
characterized in that:
- the cutting means (14) comprise at least two arms (44a, 44b; 46) each of which can come into contact with the pipe (1), on both sides of the latter;
- on one of the arms (44a, 44b) there is disposed at least one cutting wheel (50a), and
- on another arm (46) there is disposed a support block (46) in the form of a diabolo.

6. Device according to any one of the preceding claims, characterized in that the cutting means (14) comprise at least two arms (44a, 46a) each of which is articulated such as to rotate relative to the carriage (22), and can come into contact on both sides of the pipe (1) by means of the action of pressure means (54) which are disposed between the arms on the opposite side of the planned areas of contact of the arms with the pipe which is opposite relative to the carriage.

7. Device according to any one of the preceding claims, characterised in that the cutting means (14) comprise pivoting cutting wheels (50a, 52b) and adjustment wedges (78a, 78b, 80a, 80b) in order to adjust the depth of cutting.

## Patentansprüche

1. Vorrichtung zum Längsschneiden eines Rohres (1) gemäß seiner Achse (2), mit:
- einem Gestell (4), welches eine Längsachse (6), Mittel (12) für die abnehmbare Befestigung an dem Rohr und eine langgestreckte Führungsschiene (20) aufweist, die mit den Mitteln (12) für die abnehmbare Befestigung verbunden ist, um das Gestell (4) um das Rohr (1) mit seiner Schiene (20), welche gemäß der Achse (2) des Rohres (1) angeordnet ist, anzuordnen,
- beweglichen Mitteln (8), welche ein Fahrgestell (22) aufweisen, das in Translation entlang der Schiene (20) zwischen zwei äußersten Positionen geführt ist, und Schneidmitteln (14), die mit dem Fahrgestell (22) verbunden sind, und
- Steuerungsmitteln (10) zum Verschieben des Fahrgestells (22) bezüglich des Gestells (4),
dadurch gekennzeichnet, daß:
- die die Mittel für die abnehmbare Befestigung (12) zwei Klemmen (24, 26) aufweisen,
- jede Klemme (24; 26) zwei Backen (28a, 28b; 30a, 30b), ein Abstandsstück und Klemmittel (36; 38) zum Klemmen der Klemmen aufweist,
- die Backen eine Klemmzone (40; 42) aufweisen und in Rotation bezüglich des Abstandsstückes (32; 34) angelenkt sind, welches sie untereinander verbindet,
- die Klemmittel (36; 38) zwischen den Backen auf der entgegengesetzten Seite der Klemmzone bezüglich des Abstandsstückes angeordnet sind, wobei sie eine Kraft für die Betätigung der Backen ausüben, und
- die Schiene (20) zwischen den Klemmen (24; 26) angeordnet ist.

2. Vorrichtung nach Anspruch 1, dadurch gekennzeichnet, daß die Steuerungsmittel (10) die beweglichen Mittel (8) einer fortlaufenden und im wesentlichen konstanten Beschleunigung um jede der äußersten Positionen herum unterwerfen, damit die Verschiebungsgeschwindigkeit der beweglichen Mittel in einer Richtung fortschreitend abnimmt, bis sie sich am Ende des Laufes aufhebt, dann fortschreitend in entgegengesetzter Richtung ansteigt, ohne daß auf sie eine äußere Kraft über die Steuerungsmittel (10) ausgeübt wird.

3. Vorrichtung nach Anspruch 1, dadurch gekennzeichnet, daß die Steuerungsmittel (10) für die Verschiebung einen Kurbelstangenaufbau (66, 68, 18) aufweisen.

4. Vorrichtung nach einem der vorhergehenden Ansprüche, in welcher das Gestell (4) im wesentlichen auf einer Seite des Rohres angeordnet ist, dadurch gekennzeichnet, daß:
- die Schneidmittel (14) mindestens zwei Arme (44a, 44b; 46a, 46b) aufweisen, von denen jeder auf beiden Seiten des Rohres (1) mit diesem in Kontakt kommt,
- auf mindestens einem der Arme (44a) mindestens ein Schneidrädchen (50a) angeordnet ist, das geeignet ist, mit dem Rohr in einer Zone in Kontakt zu kommen, die im wesentlichen der Kontaktzone (den Kontaktzonen) des anderen Armes (46a) diametral entgegengesetzt und auf der dem Gestell entgegengesetzten Seite bezüglich einer Ebene (P) angeordnet ist, welche durch die Achse (2) des Rohres (1) hindurchgeht und senkrecht zu der Ebene (P'), welche durch die Achse des Rohres und die Achse (6) des Gestells hindurchgeht.

5. Vorrichtung nach einem der Ansprüche 1 bis 3, dadurch gekennzeichnet, daß
- die Schneidmittel (14) mindestens zwei Arme (44a, 44b; 46) aufweisen, von denen jeder geeignet ist, auf beiden Seiten des Rohres (1) mit diesem in Kontakt zu kommen,
- auf einem der Arme (44a, 44b) mindestens ein Schneidrädchen (50a) angeordnet ist und
- auf einem anderen Arm (46) ein Stützschuh (48) in Form des Stützfußes angeordnet ist.

6. Vorrichtung nach einem der vorhergehenden Ansprüche, dadurch gekennzeichnet, daß die Schneidmittel (14) mindestens zwei Arme (44a, 46a) aufweisen, von denen jeder in Rotation bezüglich des Fahrgestells (22) angelenkt ist und geeignet ist, auf beiden Seiten des Rohres (1) unter Wirkung der Druckmittel (54) in Kontakt zu kommen, welche zwischen den Armen auf der Seite angeordnet sind, die bezüglich dem Fahrgestell den Zonen entgegengesetzt ist, welche für den Kontakt der Arme mit dem Rohr vorgesehen sind.

7. Vorrichtung nach einem der vorhergehenden Ansprüche, dadurch gekennzeichnet, daß die Schneidmittel (14) schwenkende Schneidrädchen (50a; 52b) und Einstellkeile (78a, 78b; 80a, 80b) für die Einstellung der Schnittiefe aufweisen.
